# EUROPÄISCHE PATENTSCHRIFT

(11) **EP 1 119 434 B1**
(45) Veröffentlichungstag und Bekanntmachung des Hinweises auf die Patenterteilung: **03.09.2003**
(21) Anmeldenummer: 99947082.6
(22) Anmeldetag: 11.10.1999
(51) Int. Cl.: B23K 9/095, G05B 19/414

(54) **REGELVORRICHTUNG FÜR EIN SCHWEISSGERÄT**
REGULATING DEVICE FOR A WELDING APPARATUS
DISPOSITIF REGULATEUR POUR APPAREIL A SOUDER

(30) Priorität: 16.10.1998 AT 173598
(43) Veröffentlichungstag der Anmeldung: 01.08.2001
(73) Patentinhaber: Fronius International GmbH, 4643 Pettenbach (AT)
(72) Erfinder: SCHICK, Roland, A-4642 Sattledt (AT); NIEDEREDER, Franz, A-4652 Fischlham (AT); BURGSTALLER, Andreas, A-4653 Eberstalzell (AT); BRUNNER, Michael, A-8055 Seiersberg (AT)
(74) Vertreter: Secklehner, Günter, Dr.
(86) Internationale Anmeldenummer: AT9900242
(87) Internationale Veröffentlichungsnummer: WO00023223

(56) Entgegenhaltungen:
- EP-A- 0 354 388
- EP-A- 0 463 489
- EP-A- 0 737 538
- EP-A- 0 907 118
- US-A- 4 973 814
- US-A- 5 708 253
- US-A- 5 808 885

## Beschreibung

Die Erfindung bezieht sich auf ein Schweißgerät wie es im Oberbegriff des Anspruches 1 beschrieben ist.

Aus der EP 0 907 118 A2 ist ein Verfahren und eine Vorrichtung für die Steuerung einer Schweißmaschine bekannt, bei der von der Steuervorrichtung über einen Bussystem Daten an ein Interface übersendet werden, wobei diese Daten von dem Interface entsprechend für die angeschlossenen Komponenten umgewandelt werden.

Weiters ist aus der US 4 973 814 A eine Steuervorrichtung für ein Widerstandschweißgerät bekannt, bei der die Regelung des Prozesses analog erfolgt und intern die Daten digital verarbeitet werden, wobei die aufgenommen analogen Daten über eine Analog/Digital-Wandler für die interne Verarbeitung umgewandelt werden. Die internen Daten werden für die Regelung des Prozesses wiederum über einen Digital/Analog-Wandler umgewandelt.

Aus der EP 0 463 489 A2 ist ein Schweißgerät bekannt, welches über einen Feldbus einen digitalen Datenaustausch mit externen Komponenten durchführt Daraus ist jedoch nicht ersichtlich, wie die Regelung und Steuerung des Schweißprozesses vom Schweißgerät durchgeführt wird.

Bei der US 5 808 885 A ist ein Schweißkontrollsystem beschrieben, bei dem wiederum die einzelnen Komponenten, insbesondere das Leistungsteil (weld power modul und welder) über einzelnen digitale und analoge Leitungen verbunden sind.

Weiters ist aus der EP 0 737 538 A1 eine Terminal-Einheit für ein Widerstandsschweißverfahren bekannt, bei dem die Terminal-Einbeit mit der Maschine digital zusammen geschaltet ist. Dabei wird von der Terminal-Einheit ein Maschinencode (machine ID) abgefragt, worauf die entsprechenden Programme geladen werden können. Hierbei ist jedoch ein Austausch einzelner Komponenten der Maschine nur dann möglich, wenn wiederum eine identische Komponente eingesetzt wird, da eine Erkennnung der Komponente nicht statt findet und somit zusätzliche Möglichkeiten einer anderen Komponente nicht genützt werden können.

Es sind bereits Steuervorrichtungen für Schweißgeräte bekannt, bei denen über einen Host, insbesondere einer Mikroprozessorsteuerung, ein Datenaustausch mit über Leitungen verbundenen Steuereinbeiten, wie beispielsweise einer Signal-Prozeß-Einheit, in folgenden SP-Einheit genannt, einem Pulsweitenmodulator, im folgenden PWM genannt, usw., durchgeführt wird. Die Steuereinheiten sind über weitere Leitungen mit externen Komponenten, wie beispielsweise einem Leistungsteil, einer Ein- und/oder Ausgabevorrichtung usw, verbunden. Im Host werden für den Schweißpiozeß die einzelnen Soll-Werte über ein entsprechendes Softwareprogramm ermittelt bzw. berechnet, worauf die Soll-Werte über einen Digital/Analog-Wandler in ein analoges Signal, insbesondere in eine Leitspannung, umgewandelt wird und somit von den Steuereinheiten verarbeitet werden können. Die einzelnen Steuereinheiten führen eine Anpassung der von den externen Komponenten gelieferten Ist-Werte an die vorgegebenen Soll-Werte durch. Weiters werden die Ist-Werte von einem Analog/Digital-Wandler in ein Digitalsignal umgewandelt und an den Host weitergegeben, sodaß dieser eine entsprechende Anpassung der einzelnen Steuersignale und/oder der Soll-Werte durchführen kann. Nachteilig ist hierbei, daß die einzelnen Steuereinheiten mit den einzelnen externen Komponenten zum Datenaustausch abgestimmt sein müssen, sodaß bei einer Änderung bzw. bei einem Wechsel einer externen Komponente auch die entsprechend für den Steuervorgang benötigte Steuereinheit ausgetauscht werden muß.

Der vorliegenden Erfindung liegt die Aufgabe zugrunde, eine Steuervorrichtung für ein Schweißgerät sowie ein Verfahren zum Steuern eines Schweißgerätes zu schaffen, bei dem die Prozeßregelung bzw. Steuerung der einzelnen externen Komponenten rein digital erfolgt.

Diese Aufgabe der Erfindung wird durch die Merkmale im Kennzeichenteil des Anspruches 1 gelöst. Vorteilhaft ist hierbei, daß für die Herstellung eines derartigen Schweißgerätes, insbesondere der gemeinsamen Baueinheit, Standardbauelemente eingesetzt werden können, sodaß ein sicherer Betrieb erzielt wird und eine geringe Baugröße erreicht werden kann, Ein weiterer Vorteil liegt darin, daß durch einfache Softwareänderungen eine Anpassung an die unterschiedlichsten Betriebsbedienungen für Sondereinsatzgebiete oder eine leichte Anpassung an neu entwickelte Komponenten des Schweißgerätes möglich ist, ohne daß dabei hardwaremäßige Änderungen durchgeführten werden müssen. Von Vorteil ist auch, daß durch die digitale Steuerung der gemeinsamen Baueinheit ein leichtes Nachrüsten bereits bestehender Schweißgeräte, die die gemeinsame Baueinheit aufweisen, auf neu entwickelten Komponenten möglich ist, da lediglich für den Einsatz der neu Entwickelten Komponenten eine Softwareanpassung durchgeführt werden muß.

Weitere vorteilhafte Ausbildungen sind in den Ansprüchen 2 bis 26 beschrieben. Die damit erzielbaren Vorteile sind der detaillierten Figurenbeschreibung zu entnehmen.

Die Erfindung umfaßt weiters auch ein Verfahren zum Steuern eines Schweißgerätes, wie es im Oberbegriff des Anspruches 27 beschrieben ist.

Die Aufgabe der Erfindung wird aber unabhängig davon auch durch ein Verfahren zum Steuern eines Schweißgerätes gemäß den im Kennzeichenteil des Anspruches 27 angegebenen Merkmalen gelöst. Vorteilhaft ist hierbei, daß durch die digitale Datenübertragung der einzelnen Komponenten untereinander eine schnelle Steuerung bzw. Regelung des Schweißprozesses durchgeführt werden kann, wodurch die Schweißqualität erheblich verbessert wird.

Weitere vorteilhafte Maßnahmen sind im Anspruch 28 beschrieben. Die damit erzielbaren Vorteile sind der detaillierten Figurenbeschreibung zu entnehmen.

Die Erfindung wird im nachfolgenden anhand der in den Zeichnungen dargestellten Ausführungsbeispiele näher erläutert.

Es zeigen:
- Fig. 1: einen schematischen Aufbau eines Schweißgerätes in vereinfachter Darstellung;
- Fig. 2: ein Schaubild einer erfindungsgemäßen Regelvorrichtung für ein Schweißgerät, in vereinfachter, schematischer Darstellung.

Einführend sei festgehalten, daß in den unterschiedlich beschriebenen Ausführungsformen gleiche Teile mit gleichen Bezugszeichen bzw. gleichen Bauteilbezeichnungen versehen werden, wobei die in der gesamten Beschreibung enthaltenen Offenbarungen sinngemäß auf gleiche Teile mit gleichen Bezugszeichen bzw. gleichen Bauteilbezeichnungen übertragen werden können. Auch sind die in der Beschreibung gewählten Lageangaben, wie z.B. oben, unten, seitlich usw. auf die unmittelbar beschriebene sowie dargestellte Figur bezogen und sind bei einer Lageänderung sinngemäß auf die neue Lage zu übertragen. Weiters können auch Einzelmerkmale oder Merkmalskombinationen aus den gezeigten und beschriebenen unterschiedlichen Ausführungsbeispielen für sich eigenständige, erfinderische oder erfindungsgemäße Lösungen darstellen.

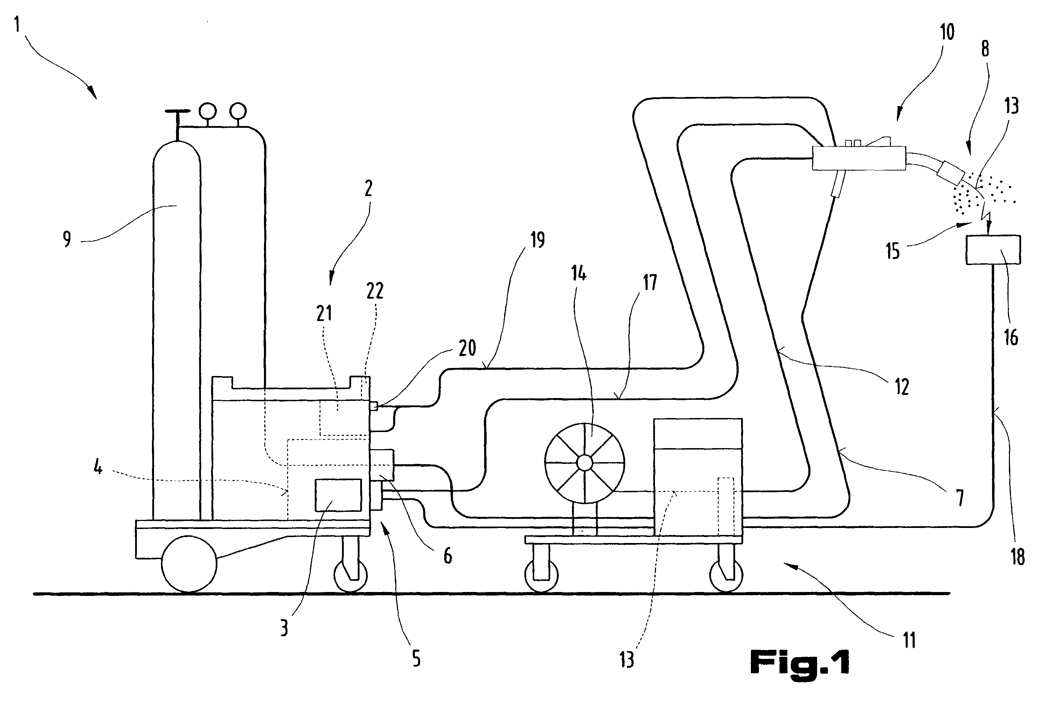

In Fig. 1 ist ein Schweißgerät 1 für verschiedenste Schweißverfahren, wie z.B. MIG/MAG-Schweißen bzw. TIG-Schweißen, gezeigt.

Das Schweißgerät 1 umfaßt eine Stromquelle 2 mit einem Leistungsteil 3, eine Steuervorrichtung 4 und ein dem Leistungsteil 3 bzw. der Steuervorrichtung 4 zugeordnetes Umschaltglied 5. Das Umschaltglied 5 bzw. die Steuervorrichtung 4 ist mit einem Steuerventil 6 verbunden, welches in einer Versorgungsleitung 7 für ein Gas 8, insbesondere ein Schutzgas, wie beispielsweise CO2, Helium oder Argon und dgl., zwischen einem Gasspeicher 9 und einem Schweißbrenner 10 angeordnet ist.

Zudem kann über die Steuervorrichtung 4 auch noch ein Drahtvorschubgerät 11, wie für das MIG/MAG-Schweißen üblich, angesteuert werden, wobei über eine Versorgungsleitung 12 ein Schweißdraht 13 von einer Vorratstrommel 14 in den Bereich des Schweißbrenners 10 zugeführt wird. Der Strom zum Aufbau eines Lichtbogens 15 zwischen dem Schweißdraht 13 und einem Werkstück 16 wird über eine Versorgungsleitung 17 vom Leistungsteil 3 der Stromquelle 2 dem Schweißbrenner 10 bzw. dem Schweißdraht 13 zugeführt, wobei das zu verschweißende Werkstück 16 über eine weitere Versorgungsleitung 18 ebenfalls mit dem Schweißgerät 1 verbunden ist und somit über dem Lichtbogen 15 ein Stromkreis aufgebaut werden kann.

Zum Kühlen des Schweißbrenners 10 kann über einen Kühlkreislauf 19 der Schweißbrenner 10 unter Zwischenschaltung eines Strömungswächters 20 mit einem Wasserbehälter 21 verbunden werden, wodurch bei der Inbetriebnahme des Schweißbrenners 10 der Kühlkreislauf 19 von der Steuervorrichtung 4 gestartet wird und somit eine Kühlung des Schweißbrenners 10 bzw. des Schweißdrahtes 13 erreicht wird.

Weiters weist das Schweißgerät 1 eine Ein- und/oder Ausgabevorrichtung 22 auf, über die die unterschiedlichsten Schweißparameter bzw. Betriebsarten des Schweißgerätes 1 eingestellt werden können. Dabei werden die über die Ein- und/oder Ausgabevorrichtung 22 eingestellten Schweißparameter an die Steuervorrichtung 4 weitergeleitet und von dieser werden anschließend die einzelnen Komponenten des Schweißgerätes 1 angesteuert.

Selbstverständlich ist es möglich, daß nicht wie in dem dargestellten Ausführungsbeispiel der Schweißbrenner 10 über einzelne Leitungen mit den einzelnen Komponenten, insbesondere mit dem Schweißgerät 1 bzw. dem Drahtvorschubgerät 11, verbunden wird, sondern, daß diese einzelnen Leitungen in einem gemeinsamen Schlauchpaket zusammengefaßt sind und an dem Schweißbrenner 10 angeschlossen werden.

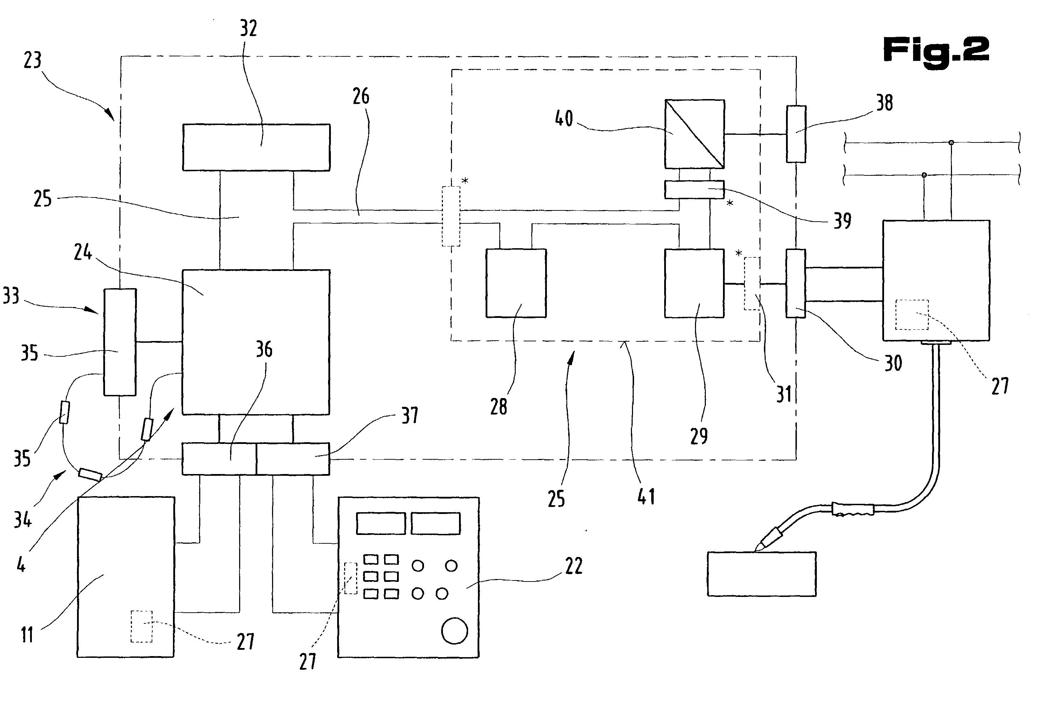

In Fig. 2 ist ein Blockschaltbild einer erfindungsgemäßen Regelvorrichtung 23 für ein Schweißgerätes 1 gezeigt.

Hierzu weist die Regelvorrichtung 23 für das Schweißgerät 1 die Steuervorrichtung 4 in Form einer Mikroprozessorsteuerung 24 bzw. eines Mikrokontrollers auf. Weiters ist in der Regelvorrichtung 23 eine Schweißprozeßregeleinheit 25 angeordnet. Die Schweißprozeßregeleinheit 25 ist derartig ausgebildet, daß nur digitale Signale verarbeitet werden können, wodurch jede zu regelnde Größe, insbesondere jeder Schweißparameter, in digitaler Form an die Schweißprozeßregeleinheit 25 übergeben werden muß. Die Schweißprozeßregeleinheit 25, insbesondere deren Komponenten, sind über einen handelsüblichen Daten/Adreßbus 26 mit der Steuervorrichtung 4, insbesondere der Mikroprozessorsteuerung 24 verbunden, wodurch eine fiktive Schnittstelle 27, welche strichliert eingezeichnet ist, zwischen der Steuervorrichtung 4, insbesondere der Mikroprozessorsteuerung 24, und der Schweißprozeßregeleinheit 25 gebildet wird. Die einzelnen Komponenten der Schweißprozeßregeleinheit 25 können sich aus einer digitalen Signal-Prozeß-Einheit 28, im folgenden SP-Einheit 28 genannt, und einem digitalen Pulsweitenmodulator 29, im folgenden PWM 29 genannt, zusammensetzen. Hierzu ist es möglich, daß die beiden Komponenten, nämlich die SP-Einheit 28 und der PWM 29, als gemeinsamer Baustein ausgebildet werden kann.

Die Ausgänge des PWM's 29 sind an eine Schnittstelle 30 der Regelvorrichtung 23 geführt, wobei hierdurch wiederum eine fiktive Schnittstelle 31 zwischen der Schweißprozeßregeleinheit 25 und der Regelvorrichtung 23 geschaffen wird. Über die Schnittstelle 28 der Regelvorrichtung 23 ist das Leistungsteil 3 mit dem PWM 29 verbunden.

Grundsätzlich kann gesagt werden, daß die Schnittstelle 30 eine Verbindungsstelle mit der externen Komponente des Leistungsteils 3 bildet, wobei die Datenübertragung von der Schnittstelle 30, insbesondere dem erzeugten Steuerungssignal, zum Leistungsteil 3 in digital Form, insbesondere durch ein Datenprotokoll, übertragen wird, d.h. daß das Leistungsteil 3, welches beispielsweise durch eine zum Stand der Technik zählende Inverterstromquelle gebildet ist, das übertragene Datenprotokoll erkennen muß und anschließend entsprechend den übergebenen Daten eine Steuerung des Leistungsteils 3 durchführt. Hierzu ist es möglich, daß die Daten des Datenprotokolls von entsprechenden Bausteinen ausgewertet werden, worauf eine Umwandlung der Daten in ein Analogsignal durchgeführt wird. Durch eine derartige Ausbildung des Leistungsteils 3 ist es möglich, daß dieses Umsetzten von den digitalen Daten des Datenprotokolls auf ein Analogsignal durch eine sogenannte Schnittstellenkarte durchgeführt werden kann. Dies hat den Vorteil, daß alle analogen zum Stand der Technik zählenden Leistungsteile 3 durch einfaches aufrüsten mit dieser Schnittstellenkarte eingesetzt werden können. Selbstverständlich ist es möglich, die Steuerung des Leistungsteils digital durchzuführen, wodurch eine derartige Schnittstellenkarte nicht benötigt wird. Hierzu ist es jedoch erforderlich, daß ein derartiges Leistungsteil 3 das übertragene Datenprotokoll erkennen muß.

Die Datenübertragung zwischen den einzelnen Komponenten der Regelvorrichtung 23, insbesondere der Mikroprozessorsteuerung 24, der SP-Einheit 28 und dem PWM 29 sowie den weiteren Komponenten, erfolgt ebenfalls über ein entsprechendes Datenprotokoll. Dabei ist es möglich, daß das interne Datenprotokoll, also jene Datenübertragung die nicht mit einer externen Komponente durchgeführt wird, gegenüber dem externen Datenprotokoll, also jene Datenübertragung die mit einer externen Komponente beispielsweise dem Leistungsteil 3 durchgeführt wird, unterschiedlich aufgebaut sein kann. Von Vorteil ist jedoch, daß das interne Datenprotokoll mit dem externen Datenprotokoll übereinstimmt, da dadurch die Entwicklung von neuen Komponenten vereinfacht wird, da keine Umsetzung von einem Datenprotokoll auf ein weiters Datenprotokoll durchgeführt werden muß.

Damit die Steuervorrichtung 4, insbesondere die Mikroprozessorsteuerung 24, einen Datenaustausch mit der SP-Einheit 28 durchführen kann, ist an der Steuervorrichtung 4 über den internen Daten/Adreßbus 26 eine Speichervorrichtung 32 angeschlossen, in der sämtliche für den Betrieb der Mikroprozessorsteuerung 24 bzw. des Schweißgerätes 1 benötigte Betriebssoftware und Steuerprogramme hinterlegt sind, sodaß durch Aktivieren des Schweißgerätes 1 die entsprechenden Programme in den Hauptspeicher des Mikroprozessors geladen werden können und somit eine Konfiguration des Schweißgerätes 1 durchgeführt werden kann, wie dies aus dem Stand der Technik für Mikroprozessorsteuerungen 24, insbesondere für Mikroprozessoren, oder Personalcomputer bekannt ist.

Um die einzelnen für das Schweißgerät 1 noch benötigten externen Komponenten, wie beispielsweise die Ein- und/oder Ausgabevorrichtung 22, das Drahtvorschubgerät 11, den Kühlkreislauf 19 usw., mit der Regelvorrichtung 23 zu verbinden, weist die Regelvorrichtung 23 eine Interfaceschnittstelle 33 auf. Diese Interfaceschnittstelle 33 ist in dem gezeigten Ausführungsbeispiel direkt mit Ein- und/oder Ausgängen der Mikroprozessorsteuerung 24 verbunden und wird bevorzugt durch eine zum Stand der Technik zählende Interfaceschnittstelle 33 beispielsweise eine RS 232 gebildet. Diese Interfaceschnittstelle 33 ist in Form eines Ringbusses 34 ausgebildet, wie dies mit strichpunktierten Linien dargestellt ist, und somit mehrere Komponenten über einen Schnittstellenstecker 35 mit dem Ringbus 34 verbunden und angesteuert werden können.

Dadurch ist es nun möglich, daß zumindest eine oder mehrere externe Komponenten mit dem Ringbus 34 verbunden werden, sodaß ein Gesamtaufbau des Schweißgerätes 1 mit der zentralen Regelvorrichtung 23 verwirklicht werden kann, d.h. daß beispielsweise der Benutzer über die Ein- und/oder Ausgabevorrichtung 22 die Einstellung der einzelnen Schweißparametern, wie beispielsweise der Schweißstromhöhe, der Schweißspannung, des Schweißdrahtdurchmessers, der unterschiedlichsten Schweißverfahren usw., einstellen kann, die von der Ein- und/oder Ausgabevorrichtung 22 über die Interfaceschnittstelle 33 an die Regelvorrichtung 23, insbesondere an die Mikroprozessorsteuerung 24, übertragen werden. Das Übertragen der einzelnen Daten der externen Komponenten erfolgt wiederum über ein abgestimmtes Datenprotokoll, wobei es wiederum möglich ist, daß die einzelnen externen Komponenten mit einer Schnittstellenkarte ausgestattet sein können.

Selbstverständlich ist es möglich, daß über die Interfaceschnittstelle 33, insbesondere über den Ringbus 34, die Mikroprozessorsteuerung 24 einen Steuervorgang mit einer externen Komponente durchführen kann, d.h. daß beispielsweise von der Mikroprozessorsteuerung 24 die Drahtvorschubgeschwindigkeit an das Drahtvorschubgerät 11 übersendet wird. Hierzu ist es auch möglich, daß während eines Schweißprozesses mit dem Schweißgerät 1 über diesen Ringbus 34 von der Mikroprozessorsteuerung 24 ein ständiger Datenaustausch beispielsweise zum Übermitteln von Soll- bzw. Ist-Werten von oder für die einzelnen Komponenten durchgeführt wird.

Weiters können an der Mikroprozessorsteuerung 24 weitere speziell ausgebildete Schnittstellen 36, 37, beispielsweise für speziell ausgebildete externe Komponenten, wie ein spezielles Drahtvorschubgerät 11 und/oder eine spezielle Ein- und/oder Ausgabevorrichtung 22 angeordnet sein. Diese weiteren Schnittstellen 36, 37 können direkt mit Ein- und/oder Ausgängen der Mikroprozessorsteuerung 24, insbesondere des Mikroprozessors, verbunden sein, sodaß wiederum ein Datenaustausch untereinander durchgeführt werden kann. Selbstverständlich ist es möglich, daß mehrere derartige Schnittstellen 36, 37 für weitere externe Komponenten angeordnet sein können, wobei übersichtshalber diese jedoch in dem dargestellten Ausführungsbeispiel nicht dargestellt sind. Es wird darauf hingewiesen, daß weitere Komponenten, Bauelemente für den Betrieb der Regelvorrichtung 23, insbesondere der Mikroprozessorsteuerung 24, wie beispielsweise ein Quarz usw., und für den Datenaustausch zwischen der Regelvorrichtung 23 und den externen Komponenten, wie beispielsweise ein Schnittstellentreiber usw., der übersichtshalber nicht dargestellt sind.

Damit eine Regelung und/oder Steuerung eines Schweißprozesses über die Regelvorrichtung 23 bzw. der Schweißprozeßregeleinheit 25 durchgeführt werden kann, ist eine weitere Schnittstelle 38 angeordnet. Über diese Schnittstelle 38 werden die vom Schweißbrenner 10 ermittelten bzw. gelieferten Ist-Werte, insbesondere dem Strom-Ist-Wert, dem Spannungs-Ist-Wert usw., an die Regelvorrichtung 23, insbesondere an die Schweißprozeßregeleinheit 25, übergeben. Hierzu ist es möglich, daß die gelieferten Ist-Werte in analoger Form an die Schnittstelle 38 von den einzelnen Ist-Werterfassungsvorrichtungen weitergeleitet werden, wie dies in dem gezeigten Ausführungsbeispiel der Fall ist. Von der Schnittstelle 38 werden die gelieferten Ist-Werte in den Daten/Adreßbus 26 eingespeist, sodaß die Schweißprozeßregeleinheit 25, insbesondere die SP-Einheit 28 und der PWM 29, eine entsprechende Regelung während eines Schweißprozesses durchführen kann. Durch dieses Einspeisen der Ist-Werte in den Daten/Adreßbus 26 wird wiederum in der Schweißprozeßregeleinheit 25 eine fiktive Schnittstelle 39, welche wiederum strichliert dargestellt ist, gebildet. Durch einen derartigen Aufbau des Daten/Adreßbusses 26 ist es auch möglich, daß die Ist-Werte parallel zur Schweißprozeßregeleinheit 25 an der Steuervorrichtung 4, insbesondere der Mikroprozessorsteuerung 24, anliegen.

Bei dem dargestellten Ausführungsbeispiel werden die Ist-Werte in analoger Form an die Schnittstelle 38 übergeben, wodurch es nunmehr notwendig ist, diese anlogen Ist-Werte in eine digitale Form umzuwandeln. Hierzu ist zwischen der Schnittstelle 38 und der fiktiven Schnittstelle 39 des Daten/Adreßbusses 26 ein Analog/Digitalwandler 40 angeordnet. Der Analog/Digitalwandler 40 wandelt nunmehr die gelieferten Ist-Werte in digitale Ist-Werte um, wobei die Weiterleitung des digitalen Ist-Wertes in Form des internen Datenprotokolls erfolgt, sodaß die einzelnen Komponenten der Schweißprozeßregeleinheit 25 und der Steuervorrichtung 4 diese Daten verarbeiten können. Selbstverständlich ist es möglich, daß der Analog/Digitalwandler 40 nicht in der Schweißprozeßregeleinheit 25 integriert ist, sondern daß der Analog/Digitalwandler 40 direkt in der externen Komponente, insbesondere im Schweißbrenner 10, angeordnet ist, wodurch eine Umwandlung des analogen Ist-Wertes außerhalb der Regelvorrichtung 23 durchgeführt wird.

Ist jedoch der Analog/Digitalwandler 40 in der Regelvorrichtung 23, insbesondere in der Schweißprozeßregeleinheit 25, angeordnet, so ist es auch möglich, daß die einzelnen Komponenten der Schweißprozeßregeleinheit 25, nämlich die SP-Einheit 28, der PWM 29 und der Analog/Digitalwandler 40, durch eigenständige Bauelemente oder durch nur ein einziges Bauelement gebildet werden.

Aus dem dargestellten Blockschaltbild ist zu erkennen, daß die einzelnen Komponenten der Schweißprozeßregeleinheit 25 eine gemeinsame Baueinheit 41 bilden. Hierzu ist es auch möglich, daß die Mikroprozessorsteuerung 24 in dieser gemeinsamen Baueinheit 41 integriert ist. Diese gemeinsame Baueinheit 41 ist durch strichlierte Linien angedeutet. Hierzu ist zu erwähnen, daß die Steuervorrichtung 4, insbesondere die Mikroprozessorsteuerung 24, und die SP-Einheit 28 und der PWM 29 über einen Datenbus, insbesondere über den internen Daten/Adreßbus 26, untereinander verbunden sind und somit ausschließlich eine reine digitale Datenübertragung durchgeführt wird. Selbstverständlich ist es möglich, daß die weiteren Komponenten, wie die Speichervorrichtung 32, die Interfaceschnittstelle 33, die einzelnen Schnittstellen 30, 36 bis 39, der Analog/Digitalwandler 40 usw., eigenständige oder zusammengehörige Baueinheiten bilden und außerhalb dieser gemeinsamen Baueinheit 41 im Schweißgerät 1 angeordnet sind, wobei diese Baueinheiten anschließend über Datenleitungen mit der gemeinsamen Baueinheit 41 der Regelvorrichtung 23 verbunden sind. Bei dem dargestellten Ausführungsbeispiel sind diese Komponenten jedoch in der gemeinsamen Baueinheit 41 der Mikroprozessorsteuerung 24, der SP-Einheit 28 und des PWM's 29 integriert.

Durch die Ausbildung der Regelvorrichtung 23 in Form der gemeinsamen Baueinheit 41 wird erreicht, daß unterschiedliche Typen von Schweißgeräten 1 produziert werden können, wobei jedoch jede Regelvorrichtung 23 durch diese gemeinsame Baueinheit 41 gebildet ist und somit eine kostengünstige Herstellung der Schweißgeräte 1 durch die Verwendung der gleichen Regelvorrichtung 23 für die unterschiedlichen Schweißgeräte 1 erzielt werden kann. Die einzelnen externen Komponenten des Schweißgerätes 1, wie beispielsweise das Drahtvorschubgerät 11, die Ein- und/oder Ausgabevorrichtung 22, das Leistungsteil 3 usw., werden über die Interfaceschnittstelle 33 oder den einzelnen Schnittstellen 30, 36 bis 39 mit der gemeinsamen Baueinheit 41, insbesondere der Regelvorrichtung 23, verbunden, sodaß ein modularer Aufbau eines derartigen Schweißgerätes 1 geschaffen wird, d.h. daß bei der Herstellung jedes Schweißgerätes 1 die gemeinsame Baueinheit 41, insbesondere die Regelvorrichtung 23, eingesetzt wird, an die anschließend die unterschiedlichsten Ausführungsformen der externen Komponenten angeschlossen werden.

Damit ein derartiger Aufbau der Schweißgeräte 1 durchgeführt werden kann, ist es notwendig, daß für die unterschiedlichen Typen von externen Komponenten unterschiedliche Steuerprogramme, die in Form von Software in der Speichervorrichtung 32 hinterlegt sind, geschaffen werden. Die Erkennung der einzelnen unterschiedlichen Typen von externen Komponenten sowie der Zuordnung der einzelnen Steuerprogramme kann dabei automatisch erfolgen, d.h. daß beispielsweise jede externe Komponente ein eigenes Erkennungsmodul 42 aufweist, sodaß beim Verbinden der externen Komponente mit der Regelvorrichtung 23 entsprechende Daten übersendet werden, wodurch die Mikroprozessorsteuerung 24 nunmehr feststellen kann, welcher Typ der externen Komponente an die gemeinsame Baueinheit 41, insbesondere an die Regelvorrichtung 23, angeschlossen wurde. Dabei ist es möglich, daß beispielsweise für die unterschiedlichen Typen von Schweißgeräten 1 unterschiedliche Leistungsteile 3 verwendet werden, sodaß Schweißgeräte 1 mit unterschiedlicher Leistung, insbesondere Stromstärke beispielsweise von 150A, 200A oder 300A usw. produziert bzw. hergestellt oder zusammengesetzt werden können, wodurch durch Übersendung von entsprechenden Daten des Erkennungsmoduls 42 die Mikroprozessorsteuerung 24 diesen Typ des Leistungsteils 3 erkennen kann und somit von der Mikroprozessorsteuerung 24 die entsprechenden Steuerprogramme, insbesondere die benötigte Software, von der Speichervorrichtung 32 geladen werden können bzw. auf diese zugegriffen werden kann.

Durch diesen modularen Aufbau des Schweißgerätes 1 wird weiters erreicht, daß der Kunde sich die einzelnen externen Komponenten, wie das Leistungsteil 3, die Einund/oder Ausgabevorrichtung 22, das Drahtvorschubgerät 11, den Kühlkreislauf 19 usw., auswählen kann und somit ohne großen Aufwand eine kundenspezifische Herstellung möglich ist, d.h. daß der Kunde sich beispielsweise eine aus einer großen Anzahl unterschiedlicher Ein- und/oder Ausgabevorrichtung 22 eine davon auswählt und gleichzeitig dem Hersteller mitteilt, daß das von ihm gewünschte Schweißgerät 1 eine Stromstärke von beispielsweise 200A leisten können muß, sodaß bei der Herstellung des Schweißgerätes 1 an die Schnittstelle 30 ein entsprechendes Leistungsteil 3 und beispielsweise an die Interfaceschnittstelle 33 die ausgewählte Ein- und/oder Ausgabevorrichtung 22 angeschlossen wird. Selbstverständlich kann der Kunde jede externe Komponente frei aus einer entsprechenden Produktpalette auswählen. Bei der Inbetriebnahme des Schweißgerätes 1 werden anschließendem von der Steuervorrichtung 4, insbesondere der Mikroprozessorsteuerung 24, die einzelnen an den verschiedensten Schnittstellen 30, 36 bis 39 und der Interfaceschnittstelle 33 angeschlossenen Komponenten nach ihrer Kennung abgefragt, sodaß die entsprechenden Steuerprogramme, insbesondere die Software, aus der Speichervorrichtung 32 geladen werden und somit ein Schweißprozeß vom Kunden ohne weitere Anpassungen durchgeführt werden kann. Dabei ist es möglich, daß die zusammengestoppelte bzw. zusammengesetzte Software in einem eigenen Speicherbereich der Speichervorrichtung 32 gespeichert wird, sodaß eine Konfigurierung und Parametrisierung des Schweißgerätes 1 nur ein einziges Mal durchgeführt werden muß.

Bei dem erfindungsgemäßen Schweißgerät 1 wird nun erreicht, daß die Schweißprozeßregelung von der Schweißprozeßregeleinheit 25, insbesondere von der gemeinsamen Baueinheit 41, digital erfolgt und daß die Konfigurierung und Parametrisierung der Schweißprozeßregeleinheit 25 softwaremäßig, insbesondere über die Steuerprogramme, erfolgt. Hierzu werden von der Mikroprozessorsteuerung 24 bei der erst bzw. bei jeder Inbetriebnahme des Schweißgerätes 1 die entsprechende Software an die Schweißprozeßregeleinheit 25, insbesondere an die SP-Einheit 28 und dem PWM 29 übersandt, sodaß eine Ansteuerung und Regelung des Leistungsteils 3 durchgeführt werden kann. Anschließend werden die entsprechenden Sollwerte von der Mikroprozessorsteuerung 24 ermittelt bzw. berechnet und an die SP-Einheit 28 übersandt, sodaß anschließend die Schweißprozeßregeleinheit 25, insbesondere die SP-Einheit 28 und der PWM 29, einen Vergleich mit den ermittelten Ist-Werten durchführt und somit ein entsprechendes Regelsignal erzeugt werden kann, welches über die Schnittstelle 30 in digitaler Form an das Leistungsteil 3 übergeben wird.

Durch die digitale Ausführung der gemeinsamen Baueinheit 41 wird erreicht, daß sämtliche Steuerprozesse bzw. Regelprozesse nunmehr in digitaler Form über ein Datenprotokoll weitergeleitet werden, wodurch Übersetzungs- bzw. Umwandlungsverluste von einem digitalen Signal in ein Analogsignal vermieden werden, wie dies bei den aus den Stand der Technik bekannten Schweißgeräten mit Mikroprozessoren bzw. Mikroprozessorsteuerungen der Fall ist, da bei diesen Schweißgeräten die Ansteuerung der einzelnen Komponenten, wie der SP-Einheit und dem PWM, in analoger Form erfolgt und somit eine Übersetzung des digitalen Signals vom Mikroprozessor notwendig ist.

Bei dem erfindungsgemäßen Schweißgerät 1 werden sämtliche Steuerungsvorgänge und Regelungsvorgänge in digitaler Form mit einem standardisierten Datenprotokoll durchgeführt, sodaß auch bei Verwendung unterschiedlicher externer Komponenten, wie beispielsweise unterschiedliche Leistungsteile 3, unterschiedliche Ein- und/oder Ausgabevorrichtungen 22 oder unterschiedliche Drahtvorschubgeräte 11, diese das Datenprotokoll erkennen können, und somit jederzeit unterschiedliche Komponenten eingesetzt werden können. Damit ein derartiges digitales System für ein Schweißgerät 1 eingesetzt werden kann, ist es erforderlich, daß bei Verwendung von analog ansteuerbaren externen Komponenten diese entsprechende Bauelemente zum Umsetzen der einzelnen digitalen Steuersignale in Analogsignale beinhalten, d.h. daß beispielsweise im Leistungsteil 3 oder in der Ein- und/oder Ausgabevorrichtung 22 Analog/Digital- und/oder Digital/Analogwandler angeordnet sind, sodaß ein Datenaustausch mit der gemeinsamen Baueinheit 41, insbesondere der Regelvorrichtung 23, möglich ist. Hierzu ist es möglich, daß bei Verwendung von analogen Komponenten zwischen diesen und der gemeinsamen Baueinheit 41, also an den Schnittstellen 30, 36 bis 39 und der Interfaceschnittstelle 33 eine Übersetzungseinheit, welche in Form einer Schnittstellenkarte ausgebildet sein kann, anzuordnen, in der sämtliche für den Datenaustausch zwischen der gemeinsamen Baueinheit 41 und der analogen Komponente notwendigen Bauelemente angeordnet sind. Durch derartiges Ausbilden der externen Komponenten oder der Anordnung der Übersetzungseinheit wird in vorteilhafter Weise erreicht, daß sämtliche bereits bestehende analogen Komponenten mit der gemeinsamen Baueinheit 41 verbunden werden können und somit eine Neuentwicklung aller bereits bestehender Komponenten nicht notwendig ist.

Selbstverständlich ist es möglich, daß sämtliche externen Komponenten voll digitalisiert ausgeführt sein können, d.h. daß zur Ansteuerung von Schaltvorrichtungen, wie sie beispielsweise im Leistungsteil 3 bei einer Inverterstromquelle verwendet werden, dies auch digital erfolgen kann. Hierzu ist es von Vorteil, daß einzelne Treiberstufen zum Ansteuern derartiger Bauelemente direkt in den externen Komponenten angeordnet sind, da dabei bei der Entwicklung der Komponenten eine Anpassung der Treiberstufen an die benötigte Leistung einfach möglich ist.

Bei dem erfindungsgemäßen Schweißgerät 1 können die einzelnen in der gemeinsamen Baueinheit 41 angeordneten Komponenten aus den unterschiedlichsten, aus dem Stand der Technik bekannten digitalen Systeme, wie der Mikroprozessorsteuerung 24, der digitalen Signal-Prozeß-Einheit 28 und dem digitalen Pulsweitenmodulator 29 gebildet werden, wobei jedoch die einzelnen Komponenten über ein gemeinsam abgestimmtes Datenprotokoll einen Datenaustausch durchführen können müssen. Bei dem Schweißgerät 1, insbesondere in der gemeinsamen Baueinheit 41 bzw. der Regelvorrichtung 23, erfolgt ein Datenaustausch intern sowie mit den externen Komponenten nurmehr über digitale Signale, d.h. daß keine unterschiedlichen Leitspannungen mehr vorhanden sind.

Bei diesem Ausführungsbeispiel werden lediglich die ermittelten Ist-Werte analog an die Schnittstelle 38 zugeführt, worauf diese analogen Signale über den Analog/Digitalwandler 40 in eine digitale Form umgewandelt werden, sodaß von der SP-Einheit 28 ein Vergleich zwischen den digitalisierten Ist-Werten und den vorgegebenen digitalen Soll-Werten durchgeführt werden kann. Daraufhin wird bei einer Abweichung der Ist-Werte von den Soll-Werten von der SP-Einheit 28 ein entsprechendes digitales Ausgangssignal erzeugt, worauf dieses über den internen Daten/Adreßbus 26 an den PWM 29 weitergeleitet wird. Der digital ausgeführte PWM 29 wandelt das vorgegebene Ausgangssignal in ein entsprechendes für das Leistungsteil 3 verständliches Digitalsignal um, sodaß über die Schnittstelle 30 eine Ansteuerung des Leistungsteils 3 möglich ist und somit eine Regelung, beispielsweise der Stromhöhe oder der Spannungshöhe usw., über das Leistungsteil 3 durchgeführt werden kann.

Wie zuvor erwähnt, kann das Leistungsteil 3 durch eine Inverterstromquelle gebildet werden, sodaß ein entsprechendes Ansteuerverfahren, wie es bereits aus dem Stand der Technik bekannten ist, eingesetzt werden kann. Die Mikroprozessorsteuerung 24 ist lediglich für die Berechnung und Übermittlung der einzelnen Soll-Werte zuständig, wobei die direkte Regelung bzw. Steuerung des Schweißprozesses über die SP-Einheit 28 und dem PWM 29 bei einer Abweichung der Ist-Werte vom Soll-Wert durchgeführt wird. Der Vorteil eines derartigen Systems liegt nun darin, daß eine unabhängige Regelung bzw. Steuerung des Schweißprozesses vorhanden ist, wobei gleichzeitig bei einer Änderung einer Einstellung eines vorgegebenen Schweißparameters der Mikroprozessor eine Neuberechnung der Soll-Werte vornehmen kann, die anschließend der SP-Einheit 28 und dem PWM 29 übergeben werden und somit eine Unterbrechung des Schweißprozesses verhindert werden kann.

Durch die unabhängige Steuerung bzw. Regelung des Schweißprozesses von der Mikroprozessorsteuerung 24 ist es möglich, daß eine 100% Reproduzierbarkeit eines Schweißprozesses möglich ist, da die Mikroprozessorsteuerung 24 die eingehenden Ist-Werte, die gleichzeitig vom Analog/Digitalwandler 40 an die Mikroprozessorsteuerung 24, der SP-Einheit 28 und dem PWM 29 übergeben werden, in einen vordefinierten Speicherbereich der Speichervorrichtung 32 hinterlegen kann, wobei jedoch zu dem selben Zeitpunkt von der SP-Einheit 28 und dem PWM 29 die Steuerung bzw. Regelung des Schweißprozesses durchgeführt wird und somit kein zeitlicher Verlust für die Steuerung bzw. Regelung entsteht. Nach einem Schweißprozeß hat der Benutzer anschließend die Möglichkeit, diese Daten aus der Speichervorrichtung 32 zu laden und eine Auswertung, ob eventuelle Fehlschweißungen vorhanden sind, durchzuführen. Hierzu ist es möglich, daß der Benutzer einen Personalcomputer über die standardisierte Interfaceschnittstelle 33, insbesondere über einen Schnittstellenstecker 35, mit der gemeinsamen Baueinheit 41, insbesondere der Regelvorrichtung 23, zusammenschalten kann und somit die Daten beispielsweise in ein Analyseprogramm geladen werden können, wodurch sämtliche Auswertungen vom Benutzer durchgeführt werden können.

Der Benutzer hat bei dem Schweißgerät 1 die Möglichkeit, daß er über die Ein- und/oder Ausgabevorrichtung 22 unterschiedliche Schweißprozesse sowie weitere unterschiedliche Einstellmöglichkeiten verschiedenster Schweißparameter, wie beispielsweise den Schweißdrahtdurchmesser, die Schweißgeschwindigkeit, die Stromhöhe usw., einstellen kann, worauf von der Ein- und/oder Ausgabevorrichtung 22 entsprechende Steuersignale über das Datenprotokoll an die Interfaceschnittstelle 33 weitergeleitet werden, worauf die Mikroprozessorsteuerung 24 durch Abarbeiten des anliegenden Datenprotokolls die benötigten Softwareprogramme bzw. Steuerprogramme für den durchzuführenden Schweißprozeß laden kann und anschließenden eine Berechnung der einzelnen Soll-Werte vornehmen kann, die an die Schweißprozeßregeleinheit 25 weitergeleitet werden. Hierzu ist es auch möglich, daß einzelne Steuerprogramme bzw. Funktionsabläufe über das Datenprotokoll unter Zwischenschaltung der Mikroprozessorsteuerung 24 an die Schweißprozeßregeleinheit 25 weitergeleitet werden.

Von Vorteil ist hierbei, daß die einzelnen Softwareprogramme bzw. Steuerprogramme von der Speichervorrichtung 32 in den Hauptspeicher der Mikroprozessorsteuerung 24 geladen werden, sodaß bei laufendem Schweißprozeß ein rasches Zugreifen auf die einzelnen Softwareprogramme bzw. Steuerprogramme möglich ist. Hat die Mikroprozessorsteuerung 24 sämtliche für den Schweißvorgang benötigten Daten errechnet, so wird über den internen Daten/Adreßbus 26 in Form eines Datenprotokolls die Schweißprozeßregeleinheit 25 angesteuert, sodaß der Benutzer einen entsprechenden Schweißprozeß durchführen kann. Weiters werden die externen Komponenten, wie das Drahtvorschubgerät 11, über die Interfaceschnittstellen 33 oder der speziellen Schnittstellen 36, 37 von der Mikroprozessorsteuerung 24 direkt angesteuert, d.h. daß diese entsprechenden Soll-Werte und eventuell ein Startsignal an das Drahtvorschubgerät 11 übergibt, worauf dieses eine selbständige Regelung in Abhängigkeit von den vorgegebenen Soll-Werten durchführt.

Es kann nunmehr gesagt werden, daß bei dem erfindungsgemäßen Schweißgerät 1 sämtliche für die Regelung und Steuerung eines Schweißprozesses benötigten Daten in digitaler Form, insbesondere über ein Datenprotokoll, durchgeführt werden, wobei lediglich die ermittelten Ist-Werte in analoger Form vorliegen und diese über zum Stand der Technik zählende Bauteile in ein digitales Signal umgewandelt werden und somit eine volldigitale Steuerung des Schweißgerätes 1 entsteht.

Vorteilhaft ist bei dieser Form der Steuerung des Schweißgerätes 1, daß eine geringe Baugröße des Schweißgerätes 1 erzielt werden kann, da für den Datenaustausch zwischen den einzelnen Komponenten untereinander nur eine geringe Leistung benötigt wird und somit sämtliche Bauteile klein dimensioniert werden können. Weiters können für die Steuerung bzw. für den Aufbau eines derartigen Schweißgerätes 1 handelsübliche zum Stand der Technik zählende Bauteile bzw. Bauelemente eingesetzt werden, wodurch aufgrund des hohen Entwicklungsstandes der digitalen Bauteile ein sicherer Betrieb des Schweißgerätes 1 sichergestellt werden kann.

Durch die Ausbildung des Schweißgerätes 1 in digitaler Form ergeben sich nunmehr viele Vorteile. Dabei ist es möglich, daß bei Entwicklung von externen Komponenten immer zur Steuerung und Regelung die Regelvorrichtung 23, insbesondere die gemeinsame Baueinheit 41, eingesetzt werden kann und somit die Herstellungskosten eines derartigen Schweißgerätes 1 wesentlich gesenkt werden können, da nicht, wie es derzeit aus dem Stand der Technik bekannt ist, bei einer Neuentwicklung eines Schweißgerätes 1 sämtliche Komponenten neu entwickelt bzw. angepaßt werden müssen, wogegen bei dem erfindungsgemäßen Schweißgerät 1 die neuentwickelten Komponenten das eingesetzte Datenprotokoll benützen bzw. erkennen müssen, sodaß die Steuerung dieser Komponenten ausschließlich softwaremäßig durchgeführt werden kann, d.h. daß für die neuentwickelten Komponenten eine entsprechende Software für die Steuerung bzw. Regelung programmiert bzw. erstellt wird, die anschließend über die standardisierte Interfaceschnittstelle 33 der Mikroprozessorsteuerung 24 übergeben wird, sodaß dieser das neuentwickelte Softwareprogramm in der Speichervorrichtung 32 speichern kann und jederzeit einen Zugriff auf dieses Softwareprogramm bei einem Verbinden der neuentwickelten Komponenten mit der gemeinsamen Baueinheit 41 durchgeführt werden kann.

Hierzu ist es möglich, daß bereits hergestellte und ausgelieferte Schweißgeräte 1 mit einer derartigen gemeinsamen Baueinheit 41 durch einfaches Update der Software dieses an die neuen externen Komponenten angepaßt werden kann und somit ein schnelles Umrüsten des Schweißgerätes 1 auf den neuesten Stand möglich ist. Weiters wird erreicht, daß bei fehlerhaften Komponenten diese einfach ausgetauscht werden können, sodaß anschließend die neu eingesetzten Komponenten durch Erkennen über das Erkennungsmodul 42 eine neue Initialisierung durchführen und somit ein sofortiger Einsatz dieses Schweißgerätes 1 wieder möglich ist.

Durch das Einsetzen eines Analog/Digitalwandlers 42 in der gemeinsamen Baueinheit 41 wird auch erreicht, daß dadurch mehrere analoge Eingänge für unterschiedliche Ist-Werte vorhanden sind, sodaß die Möglichkeit besteht, unterschiedlichsten Ist-Werterfassungen, wie beispielsweise der Stromhöhe, der Betriebstemperatur, der Ausgangsspannung des Schweißbrenners 1 usw., zu erfassen und zu verarbeiten, da durch die automatische Erkennung der einzelnen Komponenten eine entsprechende Software von der Mikroprozessorsteuerung 24 geladen wird und somit durch die unterschiedlichsten Software-Programme unterschiedliche Ist-Werte verarbeitet werden können. Dadurch wird auch erreicht, daß jede beliebige zum Stand der Technik zählende Komponente eingesetzt werden kann.

Weiters ist es möglich, daß durch die digitale Steuerung des Schweißgerätes 1 in einfacher Form eine Fernwartung des Schweißgerätes 1 durchgeführt werden kann, da der Benutzer das Schweißgerät 1 über die standardisierte Schnittstelle 27 ein Modem anschließen kann und somit eine Fernübertragung der neuentwickelten Software oder eventuelle Anpassungen von einer Zentralstelle bzw. vom Hersteller durchgeführt werden kann.

Der Ordnung halber sei abschließend darauf hingewiesen, daß zum besseren Verständnis des Aufbaus des Schweißgerätes 1 dieses nur schematisch dargestellt wurden.

Die den eigenständigen erfinderischen Lösungen zugrundeliegende Aufgabe kann der Beschreibung entnommen werden.

Vor allem können die einzelnen in den Fig. 1; 2 gezeigten Ausführungen den Gegenstand von eigenständigen, erfindungsgemäßen Lösungen bilden. Die diesbezüglichen, erfindungsgemäßen Aufgaben und Lösungen sind den Detailbeschreibungen dieser Figuren zu entnehmen.

### Bezugszeichenaufstellung

- 1: Schweißgerät
- 2: Stromquelle
- 3: Leistungsteil
- 4: Steuervorrichtung
- 5: Umschaltglied

- 6: Steuerventil
- 7: Versorgungsleitung
- 8: Gas
- 9: Gasspeicher
- 10: Schweißbrenner

- 11: Drahtvorschubgerät
- 12: Versorgungsleitung
- 13: Schweißdraht
- 14: Vorratstrommel
- 15: Lichtbogen

- 16: Werkstück
- 17: Versorgungsleitung
- 18: Versorgungsleitung
- 19: Kühlkreislauf
- 20: Strömungswächter

- 21: Wasserbehälter
- 22: Ein- und/oder Ausgabevorrichtung
- 23: Regelvorrichtung
- 24: Mikroprozessorsteuerung
- 25: Schweißprozeßregeleinheit

- 26: Daten/Adreßbus
- 27: Schnittstelle
- 28: Signal-Prozeß-Einheit
- 29: Pulsweitenmodulator
- 30: Schnittstelle

- 31: Schnittstelle
- 32: Speichervorrichtung
- 33: Interfaceschnittstelle
- 34: Ringbus
- 35: Schnittstellenstecker

- 36: Schnittstelle
- 37: Schnittstelle
- 38: Schnittstelle
- 39: Schnittstelle
- 40: Analog/Digitalwandler

- 41: gemeinsame Baueinheit
- 42: Erkennungsmodul

## Patentansprüche

1. Schweißgerät, bestehend aus einer digitalen Steuervorrichtung, insbesondere einer Mikroprozessorsteuerung, und einer Schweißprozeßregeleinheit, die durch eine Signal-Prozeß-Einheit, im folgenden SP-Einheit genannt, und einem Pulsweitenmodulator, im folgenden PWM genannt, gebildet ist, sowie einer externen Komponente, wie beispielsweise einem Leistungsteil oder einer Ein- und/oder AusgabeVorrichtung usw., wobei der Datenaustausch mit einer internen und/oder externen Komponente in digitaler Form, insbesondere mit Digitalsignalen, erfolgt, **dadurch gekennzeichnet, daß** die Schweißprozeßregelung von der Schweißprozeßregeleinheit (25) digital erfolgt, und daß die Konfigurierung und Parametrierung der Schweißprozeßregeleinheit (25) durch die Steuervorrichtung (4) mittels Software erfolgt, wobei die Komponenten der Schweißprozeßregeleinheit (25), insbesondere die SP-einheit (28) und der PWM (29), als gemeinsamer Bauteil, insbesondere Baustein oder Bauelement, ausgebildet sind und der Datentransfer von der Steuervorrichtung (4) zu der SP-Einheit (28) oder zu externen Komponenten durch digitale Datensätze, insbesondere durch ein Datenprotokoll, erfolgt, und daß die externen Komponenten, wie beispielsweise das Leistungsteil (3), die Ein- und/oder Ausgabevorrichtung (22) usw., ein Erkennungsmodul (42) aufweisen.

2. Schweißgerät nach Anspruch 1, **dadurch gekennzeichnet, daß** die Steuervorrichtung (4), insbesondere die Mikroprozessorsteuerung (24), und die Schweißprozeßregeleinheit (25), welche durch die SP-Einheit (28) und dem PWM (29) gebildet ist, über einen Daten/Adreßbus (26) untereinander verbunden sind und/oder eine gemeinsame Baueinheit (41) bilden, wobei der Datenaustausch untereinander und zu den externen Komponenten digital erfolgt.

3. Schweißgerät nach Anspruch 1 oder 2, **dadurch gekennzeichnet, daß** die Steuervorrichtung (4), insbesondere die Mikroprozessorsteuerung (24), und die Schweißprozeßregeleinheit (25) über einen Daten/Adreßbus (26) gegebenenfalls mit einer Schnittstelle (27), miteinander verbunden sind.

4. Schweißgerät nach einem oder mehreren der vorhergehenden Ansprüche,
**dadurch gekennzeichnet, daß** der oder die Ausgänge des PWM's (29) an eine Schnittstelle (30) der Regelvorrichtung (23) geführt sind.

5. Regelvorrichtung nach einem oder mehreren der vorhergehenden Ansprüche, **dadurch gekennzeichnet, daß** zwischen der Schweißprozeßregeleinheit (25), insbesondere dem PWM (29), und der Schnittstelle (30) am Daten/Adreßbus (26) eine weitere Schnittstelle (31) angeordnet ist.

6. Schweißgerät nach einem oder mehreren der vorhergehenden Ansprüche, **dadurch gekennzeichnet, daß** die Schnittstelle (30) eine Verbindungsstelle mit einer externen Komponente, insbesondere mit dem Leistungsteil (3), bildet, wobei die Datenübertragung von der Schnittstelle (30), insbesondere dem PWM (29), zu dem Leistungsteil (3) in digitaler Form, insbesondere durch ein digitales Datenprotokoll, erfolgt.

7. Schweißgerät nach einem oder mehreren der vorhergehenden Ansprüche, **dadurch gekennzeichnet, daß** das Leistungsteil (3) durch eine Inverterstromquelle gebildet ist.

8. Schweißgerät nach einem oder mehreren der vorhergehenden Ansprüche, **dadurch gekennzeichnet, daß** die Datenübertragung zwischen den Komponenten der Regelvorrichtung (23), insbesondere der Steuervorrichtung (4), der SP-Einheit (28) und dem PWM (29) sowie die Datenübertragung von der Regelvorrichtung (23) zu den externen Komponenten, wie beispielsweise dem Leistungsteil (3), der Ein- und/ oder Ausgabevorrichtung (22), dem Drahtvorschubgerät (11) usw., mit dem gleichen Datenprotokoll oder einem unterschiedlichen Datenprotokoll erfolgt.

9. Schweißgerät nach einem oder mehreren der vorhergehenden Ansprüche, **dadurch gekennzeichnet, daß** die externen Komponenten über eine Interfaceschnittstelle (33) oder eine speziell ausgebildete Schnittstelle (30, 36 bis 39) mit der gemeinsamen Baueinheit (41), insbesondere der Regelvorrichtung (23), verbunden sind.

10. Schweißgerät nach Anspruch 9, **dadurch gekennzeichnet, daß** die Interfaceschnittstelle (33) durch einen Ringbus (34) gebildet ist, über der die externen Komponenten mit der Regelvorrichtung (23), insbesondere mit der Steuervorrichtung (4), verbunden sind.

11. Schweißgerät nach einem oder mehreren der vorhergehenden Ansprüche, **dadurch gekennzeichnet, daß** an der Mikroprozessorsteuerung (24) zumindest eine weitere speziell ausgebildete Schnittstelle (36, 37) angeordnet ist.

12. Schweißgerät nach einem oder mehreren der vorhergehenden Ansprüche, **dadurch gekennzeichnet, daß** der Pulsweitenmodulator (29) in digitaler Schaltungstechnik ausgebildet ist.

13. Schweißgerät nach einem oder mehreren der vorhergehenden Ansprüche, **dadurch gekennzeichnet, daß** an der Regelvorrichtung (23), insbesondere an der Schweißprozeßregeleinheit (25), eine weitere Schnittstelle (39) angeordnet ist.

14. Schweißgerät nach einem oder mehreren der vorhergehenden Ansprüche, **dadurch gekennzeichnet, daß** zwischen der Schweißprozeßregeleinheit (25), insbesondere der SP-Einheit (28) und dem PWM (29), und der Schnittstelle (38) am Daten/Adreßbus (26) eine Verbindung gegebenenfalls über eine weitere Schnittstelle (27) aufgebaut ist.

15. Schweißgerät nach einem oder mehreren der vorhergehenden Ansprüche, **dadurch gekennzeichnet, daß** ein Analog/Digitalwandler (40) der gemeinsamen Baueinheit (41) vorgeordnet ist, an dem mehrere analoge Eingänge anliegen.

16. Schweißgerät nach einem oder mehreren der vorhergehenden Ansprüche, **dadurch gekennzeichnet, daß** der Analog/Digitalwandler (40) mit der Schnittstelle (38) verbunden ist.

17. Schweißgerät nach Anspruch 16, **dadurch gekennzeichnet, daß** der Analog/Digitalwandler (40) in der Schweißprozeßregeleinheit (25) angeordnet ist.

18. Schweißgerät nach einem oder mehreren der vorhergehenden Ansprüche, **dadurch gekennzeichnet, daß** die Schnittstelle (39) bei der Anordnung des Analog/Digitalwandlers (40) in der Schweißprozeßregeleinheit (25) zwischen dem Analog/Digitalwandler (40) und den weiteren Komponenten der Schweißprozeßregeleinheit (25), insbesondere der SP-Einheit (28) und dem PWM (29), angeordnet ist.

19. Schweißgerät nach einem oder mehreren der vorhergehenden Ansprüche, **dadurch gekennzeichnet, daß** mehrere digitale Ausgänge insbesondere mit seriellem Datenprotokoll mit der SP-Einheit (28) und/oder der Steuervorrichtung (4) verbunden sind.

20. Schweißgerät nach einem oder mehreren der vorhergehenden Ansprüche, **dadurch gekennzeichnet, daß** die SP-Einheit (28) und der PWM (29) die Steuerung bzw. die Regelung des Schweißprozesses durchführen.

21. Schweißgerät nach einem oder mehreren der vorhergehenden Ansprüche, **dadurch gekennzeichnet, daß** die Mikroprozessorsteuerung (24) die Berechnung der Soll-Werte und/oder der Funktionsabläufe des Schweißprozesses vornimmt und daß die Mikroprozessorsteuerung (24) die Soll-Werte und/oder die Funktionsabläufe über den Daten/Adreßbus (26) an die SP-Einheit (28) und dem PWM (29) weiterleitet.

22. Schweißgerät nach einem oder mehreren der vorhergehenden Ansprüche, **dadurch gekennzeichnet, daß** in der gemeinsamen Baueinheit (41) eine SpeicherVorrichtung (32) angeordnet ist, in der Softwareprogramme und/oder Betriebssysteme für die Mikroprozessorsteuerung (24) hinterlegt sind.

23. Schweißgerät nach einem oder mehreren der vorhergehenden Ansprüche,
**dadurch gekennzeichnet, daß** die gemeinsame Baueinheit (41) eine standardisierte Interfaceschnittstelle (33) aufweist, über die das Schweißgerät (1), insbesondere die gemeinsame Baueinheit (41), mit einer weiteren standardisierten Interfaceschnittstelle für einen Datenaustausch verbindbar ist.

## Claims

1. Welding apparatus consisting of a digital control device, in particular a microprocessor control, and a welding process control unit, comprising a signal processing unit, hereinafter referred to as SP unit, and a pulse width modulator, hereinafter referred to as PWM, and one external component such as a power component or an input and/or output device, etc., whereby data is exchanged with one internal and/or external component in digital format, in particular by digital signals, **characterised in that** the welding process control is operated digitally by the welding process control unit (25) and the configuration and parameter settings of the welding process control unit (25) are handled by the control device (4) through software means, wherein the components of the welding process control unit (25), in particular the SP unit (28) and the PWM (29), are built as a common component, in particular a module or component unit, and data is transferred from the control device (4) to the SP unit (28) or to external components by digital data sets, in particular by means of a data protocol, and the external components, such as the power component (3), the input and/or output device (22), etc., have a detection module (42).

2. Welding apparatus as claimed in claim 1, **characterised in that** the control device (4), in particular the microprocessor control (24), and the welding process control unit (25), comprising the SP unit (28) and the PWM (29), are connected to one another by means of a data/address bus (26) and/or are provided as a common unit (41), the data being exchanged digitally between one another and with the external components.

3. Welding apparatus as claimed in claim 1 or 2, **characterised in that** the control device (4), in particular the microprocessor control (24), and the welding process control unit (25) are connected to one another via a data/address bus (26), optionally with an interface (27).

4. Welding apparatus as claimed in one or more of the preceding claims, **characterised in that** the output(s) of the PWM (29) lead(s) to an interface (30) of the control unit (23).

5. Control system as claimed in one or more of the preceding claims, **characterised in that** another interface (31) is provided between the welding process control unit (25), in particular the PWM (29), and the interface (30) at the data/address bus (26).

6. Welding apparatus as claimed in one or more of the preceding claims, **characterised in that** the interface (30) forms a connection point to an external component, in particular the power component (3), the data being transferred from the interface (30), in particular the PWM (29), to the power component (3), in digital format, in particular by means of a digital data protocol.

7. Welding apparatus as claimed in one or more of the preceding claims, **characterised in that** the power component (3) is an inverting current source.

8. Welding apparatus as claimed in one or more of the preceding claims, **characterised in that** data is transferred between the components of the control unit (23), in particular the control device (4), the SP unit (28) and the PWM (29), and data is transferred from the control unit (23) to the external components, for example the power component (3), the input and/or output device (22), the wire feed device (11), etc., with the same data protocol or a different data protocol.

9. Welding apparatus as claimed in one or more of the preceding claims, **characterised in that** the external components are connected to the common unit (41), in particular the control unit (23), via an interface (33) or a specially configured interface (30, 36 to 39).

10. Welding apparatus as claimed in claim 9, **characterised in that** the interface (33) is a ring bus (34), by means of which the external components are connected to the control unit (23), in particular to the control device (4).

11. Welding apparatus as claimed in one or more of the preceding claims, **characterised in that** the microprocessor control (24) is provided with at least one other, specially configured interface (36, 37).

12. Welding apparatus as claimed in one or more of the preceding claims, **characterised in that** the pulse width modulator (29) is built using digital switching circuitry.

13. Welding apparatus as claimed in one or more of the preceding claims, **characterised in that** another interface (39) is provided on the control unit (23), in particular on the welding process control unit (25).

14. Welding apparatus as claimed in one or more of the preceding claims, **characterised in that** another interface (27) is set up between the welding process control unit (25), in particular the SP unit (28) and the PWM (29), and the interface (38) on the data/address bus (26).

15. Welding apparatus as claimed in one or more of the preceding claims, **characterised in that** an analogue-to-digital converter (40) is arranged upstream of the common unit (41), adjacent to several analogue inputs.

16. Welding apparatus as claimed in one or more of the preceding claims, **characterised in that** the analogue-to-digital converter (40) is connected to the interface (38).

17. Welding apparatus as claimed in claim 16, **characterised in that** the analogue-to-digital converter (40) is disposed in the welding process control unit (25).

18. Welding apparatus as claimed in one or more of the preceding claims, **characterised in that**, if the analogue-to-digital converter (40) is disposed in the welding process control unit (25), the interface (39) is set up between the analogue-to-digital converter (40) and the other components of the welding process control unit (25), in particular the SP unit (28) and the PWM (29).

19. Welding apparatus as claimed in one or more of the preceding claims, **characterised in that** several digital outputs are connected to the SP unit (28) and/or the control device (4), in particular with a serial data protocol.

20. Welding apparatus as claimed in one or more of the preceding claims, **characterised in that** the SP unit (28) and the PWM (29) operate the control or regulation of the welding process.

21. Welding apparatus as claimed in one or more of the preceding claims, **characterised in that** the microprocessor control (24) handles computation of the desired values and/or operating sequences of the welding process and the microprocessor control (24) forwards the desired values and/or the operating sequences to the SP unit (28) and the PWM (29) via the data/address bus (26).

22. Welding apparatus as claimed in one or more of the preceding claims, **characterised in that** the common unit (41) co-operates with a memory device (32), in which the software programmes and/or operating systems for the microprocessor control (24) are stored.

23. Welding apparatus as claimed in one or more of the preceding claims, **characterised in that** the common unit (41) has a standardised interface (33) by means of which the welding apparatus (1), in particular the common unit (41), can be connected to another standardised interface for exchanging data with one another.

## Revendications

1. Appareil à souder, constitué d'un dispositif de commande numérique, notamment d'une commande à microprocesseur et d'une unité de réglage du procédé de soudage qui est formée par une unité de traitement de signaux, désigné ci-après par unité SP et un modulateur de largeur d'impulsion, désigné ci-après par PWM, et un composant externe, comme par exemple une partie de puissance ou un dispositif d'entrée et/ou de sortie etc., où l'échange des données avec un composant interne et/ou externe a lieu sous forme numérique, notamment avec des signaux numériques, **caractérisé en ce que** le réglage du procédé de soudage a lieu de manière numérique par unité de réglage de procédé de soudage (25), et **en ce que** la configuration et le paramétrage de l'unité de réglage de procédé de soudage (25) par le dispositif de commande (4) a lieu par un logiciel, où les composants de l'unité de réglage de procédé de soudage (25), notamment l'unité SP (28) et le PWM (29) sont réalisés sous forme de composant commun, notamment de module ou d'élément modulaire, et **en ce que** le transfert des données du dispositif de commande (4) à l'unité SP (28) ou à des composants externes a lieu par des jeux de données numériques, notamment par un protocole de données, et **en ce que** les composants externes, comme par exemple la partie de puissance (3), le dispositif d'entrée et/ou d'émission (22) etc., présentent un module d'identification (42).

2. Appareil à souder selon la revendication 1, **caractérisé en ce que** le dispositif de commande (4), notamment la commande à microprocesseur (24) et l'unité de réglage de procédé de soudage (25), qui est formée par unité SP (28) et le PWM (29) sont reliés entre eux par un bus de données/d'adresses (26) et/ou forment une unité de construction commune (41), où l'échange de données entre eux et vers les composants externes a lieu d'une manière numérique.

3. Appareil à souder selon la revendication 1 ou 2, **caractérisé en ce que** le dispositif de commande (4), notamment la commande à microprocesseur (24) et l'unité de réglage de procédé de soudage (25) sont reliés entre eux par un bus de données/d'adresses (26), le cas échéant avec une interface (27).

4. Appareil à souder selon l'une ou plusieurs des revendications précédentes, **caractérisé en ce que** la ou les sorties du PWM (29) sont guidées à une interface (30) du dispositif de réglage (23).

5. Appareil à souder selon l'une ou plusieurs des revendications précédentes, **caractérisé en ce qu'**il est disposé entre l'unité de réglage de procédé de soudage (25), notamment le PWM (29) et l'interface (30) au bus de données/d'adresses (26) une autre interface (31).

6. Appareil à souder selon l'une ou plusieurs des revendications précédentes, **caractérisé en ce que** l'interface (30) forme un emplacement de liaison avec un composant externe, notamment avec la partie de puissance (3), où la transmission des données a lieu de l'interface (30), notamment du PWM (29) à la partie de puissance (3) sous forme numérique, notamment par un protocole de données numérique.

7. Appareil à souder selon l'une ou plusieurs des revendications précédentes, **caractérisé en ce que** la partie de puissance (3) est formée par une source de courant inverseur.

8. Appareil à souder selon l'une ou plusieurs des revendications précédentes, **caractérisé en ce que** la transmission des données entre les composants du dispositif de réglage (23), notamment du dispositif de commande (4), de l'unité SP (28) et du PWM (29) ainsi que la transmission des données du dispositif de réglage (23) aux composants externes, comme par exemple à la partie de puissance (3), au dispositif d'entrée et/ou d'émission (22), à l'appareil de poussée de fil (11) etc. a lieu avec le même protocole de données ou avec un protocole de données différent.

9. Appareil à souder selon l'une ou plusieurs des revendications précédentes, **caractérisé en ce que** les composants externes sont reliés par une interface (33) ou une interface réalisée spécialement (30, 36 à 39) à l'unité de construction commune (41), notamment du dispositif de réglage (23).

10. Appareil à souder selon la revendication 9, **caractérisé en ce que** l'interface (33) est formée par un bus annulaire (34) par lequel les composants externes sont reliés au dispositif de réglage (23), notamment au dispositif de commande (4).

11. Appareil à souder selon l'une ou plusieurs des revendications précédentes, **caractérisé en ce qu'**il est disposé à la commande à microprocesseur (24) au moins une autre interface réalisée spécialement (36, 37).

12. Appareil à souder selon l'une ou plusieurs des revendications précédentes, **caractérisé en ce que** le modulateur de largeur d'impulsion (29) est réalisé selon une technique de commutation numérique.

13. Appareil à souder selon l'une ou plusieurs des revendications précédentes, **caractérisé en ce qu'**il est disposé au dispositif de réglage (23), notamment à l'unité de réglage de procédé de soudage (25), une autre interface (39).

14. Appareil à souder selon l'une ou plusieurs des revendications précédentes, **caractérisé en ce qu'**il est réalisé entre l'unité de réglage de procédé de soudage (25), notamment l'unité SP (28) et le PWM (29) et l'interface (38) au bus de données/d'adresses (26) une liaison, le cas échéant par une autre interface (27).

15. Appareil à souder selon l'une ou plusieurs des revendications précédentes **caractérisé en ce qu'**un convertisseur analogique/numérique (40) est disposé en amont de l'unité de construction commune (41) auquel s'appliquent plusieurs entrées analogiques.

16. Appareil à souder selon l'une ou plusieurs des revendications précédentes, **caractérisé en ce que** le convertisseur analogique/numérique (40) est relié à l'interface (38).

17. Appareil à souder selon la revendication 16, **caractérisé en ce que** le convertisseur analogique/numérique (40) est disposé dans l'unité de réglage de procédé de soudage (25).

18. Appareil à souder selon l'une ou plusieurs des revendications précédentes, **caractérisé en ce que** l'interface (39), lors de la disposition du convertisseur analogique/numérique (40) dans l'unité de réglage de procédé de soudage (25), est disposée entre le convertisseur analogique/numérique (40) et les autres composants de l'unité de réglage de procédé de soudage (25), notamment de l'unité SP (28) et du PWM (29).

19. Appareil à souder selon l'une ou plusieurs des revendications précédentes, **caractérisé en ce que** plusieurs sorties numériques, notamment à protocole de données sériel, sont reliées à l'unité SP (28) et/ou au dispositif de commande (4).

20. Appareil à souder selon l'une ou plusieurs des revendications précédentes, **caractérisé en ce que** l'unité SP (28) et le PWM (29) exécutent la commande respectivement le réglage du procédé de soudage.

21. Appareil à souder selon l'une ou plusieurs des revendications précédentes, **caractérisé en ce que** la commande à microprocesseur (24) effectue le calcul des valeurs de consigne et/ou des déroulements de fonctionnement du procédé de soudage, et **en ce que** la commande à microprocesseur (24) transmet les valeurs de consigne et/ou les déroulements de fonctionnement par le bus de données/d'adresses (26) à l'unité SP (28) et au PWM (29).

22. Appareil à souder selon l'une ou plusieurs des revendications précédentes, **caractérisé en ce qu'**il est disposé dans l'unité de construction commune (41) un dispositif de mémorisation (32) dans lequel sont stockés des programmes de logiciel et/ou des systèmes de fonctionnement pour la commande à microprocesseur (24).

23. Appareil à souder selon l'une ou plusieurs des revendications précédentes, **caractérisé en ce que** l'unité de construction commune (41) présente une interface standard (33) par laquelle l'appareil à souder (1), notamment l'unité de construction commune (41), peut être relié à une autre interface standard en vue d'un échange de données.
